# EUROPEAN PATENT APPLICATION

(11) **EP 3 564 285 A1**
(43) Date of publication of application: **06.11.2019**
(21) Application number: 18170357.0
(22) Date of filing: 02.05.2018
(51) Int. Cl.: C08G 18/76, C08G 18/16, C08G 18/20, C08G 18/22, C08G 18/32, C08G 18/48, C09J 175/08

(54) **STRUCTURAL TWO-COMPONENT ADHESIVE**

(71) Applicant: Henkel AG & Co. KGaA, 40589 Düsseldorf (DE)
(72) Inventor: Zöller, Thomas, 45276 Essen (DE); Schlingloff, Nicole, 40593 Düsseldorf (DE); Weinhausen, Tim, 53840 Troisdorf (DE); Engels, Thomas, 40589 Düsseldorf (DE); Okamoto, Oliver-Kei, 40213 Düsseldorf (DE)

(57) **Abstract**

The present invention relates to a structural two-component adhesive composition comprising a latent catalyst mixture as well as a method for producing the same. Further, the present invention relates to a method for bonding substrates using the structural two-component adhesive composition.

## Description

The present invention relates to a structural two-component adhesive composition comprising a latent catalyst mixture as well as a method for producing the same. Further, the present invention relates to a method for bonding substrates using the structural two-component adhesive composition.

In light of the increasing environmental awareness, industry faces the challenge to adapt well establish structures and products to meet existing and future emission targets. One approach to meet those targets is to reduce the weight of existing products, for example automotive parts. However, the weight reduction has to be realized while maintaining the physical and mechanical properties of those products. Although lightweight structures such as sandwich-structured composite materials are generally known in the art, the challenge remains to bond multiple substrates to obtain a mechanically stable product. The difficulties of bonding multiple substrates having different properties and showing different behavior are usually addressed by employing special adhesive compositions which should have high strength combined with high elongation to overcome the different substrate behavior. Whereas the adhesive was formerly employed for its adhesive character, it is today part of the whole structure and its performance enables the achievement of new combinations of performance characteristics, such as stiffness combined with a high flexibility.

US 2015/0203728 relates to two-component polyurethane adhesives having high strength and elasticity at a particular low glass transition temperature, suitable as a structural adhesive. The described adhesive contains a triol, a diol, a polyamine, a polyisocyanate and a polyurethane polymer having isocyanate groups in certain ratios, and a Fe(III) or Ti(IV) or Zr(IV) or Hf(IV) chelate-complex-catalyst.

WO 2009/015149 discloses a two-part polyurethane adhesive for bonding substrates together which exhibits a low change in G-modulus over a temperature range where such adhesives are utilized. The two part composition comprising: A. an isocyanate functional group containing component comprising one or more polyisocyanates and one or more isocyanate functional group containing prepolymers having in its backbone the residue of one or more chains derived from polypropylene oxide, copolymers of ethylene oxide and propylene oxide or mixtures thereof wherein equivalent weight of the chains are predominantly about 780 or greater; B. an isocyanate reactive component comprising one or more polypropylene oxide, copolymers of ethylene oxide and propylene oxide or mixtures thereof having equivalent weights predominantly about 960 or greater and terminal groups which are reactive with isocyanate groups; C. one or more low molecular weight compounds having two or more isocyanate reactive groups and a molecular weight of 120 or less wherein the low molecular weight compounds are present as a residue in the isocyanate functional group containing prepolymer, as a component of the isocyanate reactive component or both; D. one or more catalysts for the reaction of isocyanate functional groups with isocyanate reactive groups wherein the catalyst may be located in the isocyanate functional group containing component or the isocyanate reactive component.

Wo 2012/078331 refers to a two-part polyurethane adhesive system which includes a resin component A and a curative B. The resin component A includes a monomeric polyisocyanate and a prepolymer. The curative B includes a polyether polyol having a molecular weight of 3000 to 20,000 and another polyol having 4 to 8 hydroxyl groups and a molecular weight from 200 to 1000. The system includes a Ti(IV) catalyst which is contained in the resin component and a blocked aza-type catalyst which is contained in the curative.

Although the concept to combine high molecular weight polyether polyol with low molecular weight chain extenders to achieve high strength and high elongation, these systems usually suffer from long curing times. Therefore, there still exists the need for an adhesive composition which shows good mechanical properties, and which combines a long enough open time for manufacturing processes and fast cure time for reduced cycle times. The good mechanical properties must be achieved after a certain cure time under defined conditions.

The object of the present invention is therefore the provision of a two-component adhesive composition with good mechanical properties such as high tensile strength, high tensile elongation, and low tensile modulus, and favorable cure kinetics, such as long open time and fast cure, in particular good heat activation behavior.

The object is solved by an adhesive composition comprising a latent catalyst which enables fast cure at ambient temperature as well as very fast cure at elevated temperatures.

A first object of the present invention is therefore a two-component adhesive composition comprising a first component A and a second component B, wherein Component A comprises:
a) at least one polyether polyol having a molecular weight of 1000 to 12000 g/mol and a functionality of 1.5 to 2.5;
b) at least one chain extender having a molecular weight of 60 to 600 g/mol and a functionality of 1.5 to 2.5;
c) a latent catalyst mixture, the mixture comprising:
   c-1) a metal chelate complex, the metal being selected from the group consisting of Ti, Zr, Fe, Zn, Al and Bi;
   c-2) at least one amidine salt and/or tertiary amine salt; and
   c-3) at least one co-catalyst capable of accelerating the trimerization of isocyanates;
and wherein Component B comprises at least one NCO-terminated compound.

It was surprisingly found that the adhesive composition according to the invention provides high strength and high elongation combined with favorable cure behavior for good processing. In addition to the mentioned characteristics, the inventive composition shows an acceptable storage stability.

Molecular weight as defined in the present invention refers to the average-number molecular weight (Mₙ) determined via gel permeation chromatography (GPC) according to DIN 55674 with THF as the eluent, unless otherwise mentioned.

"Open time" as used in the present invention refers to the amount of time from the application of the adhesive, to the time it will no longer bond.

Process reliability can be adapted by the mixing ratio of the polyol component and the NCO-terminated compound which is preferably close to 1 to 1 in volume. Concerning the inventive composition, the best results with respect to mechanical properties of the cured material were achieved when the ratio was within the rage of 10:1 to 1:2. Therefore, an embodiment of the present invention is preferred wherein the mixing ratio by volume of component A and component B is 10:1 to 1:2, preferably 5:1 to 1:1.1.

The adhesive composition according to the invention comprises at least one polyether polyol. The functionality of the at least one polyether polyol is preferably 1.8 to 2.1. It was surprisingly found that the open time and cure time can be favorably adjusted to fast cycle times if the functionality is within the claimed range.

The at least one polyether polyol is preferably present in the inventive composition in an amount of at least 40 wt.-%, preferably 60 to 80 wt.-%, based on the total weight of component A, respectively. It was surprisingly found that mechanical properties of the adhesive composition were especially favorable when the amount of the at least on polyether polyol was kept within the mentioned range.

In a further preferred embodiment, the at least one polyether polyol is a polyether diol which preferably comprises primary hydroxyl groups or a mixture of primary and secondary hydroxyl groups. In an especially preferred embodiment, the at least one polyether polyol is a primary polyether diol. It was surprisingly found the cure time of the adhesive composition could be adjusted to fast cycle times by employing a polyether diol as described.

In order to avoid any unfavorable mechanical properties like high modulus and reduced elongation and any decrease in open time, the inventive composition is preferably essentially free of triols or higher functionalized polyols.

The adhesive composition according to the invention comprises at least one chain extender. The at least one chain extender preferably possess a functionality of 1.8 to 2.1. In a further preferred embodiment, the at least one chain extender is present in an amount of 4 to 15 wt.-%, preferably 5 to 12 wt.-%, based in the total weight of component A, respectively.

In a preferred embodiment, the at least one chain extender is a diol, preferably a diol selected from the group consisting of 1,2-propanediol; 1,3-propanediol; 2-methyl-1,3-propanediol; 1,4-butanediol; 1,5-pentanediol; 3-methyl-1,5-pentanediol; 1,6-hexanediol; 1,9-nonanediol; ethylene glycol, polyethylene glycol, cyclohexane-1,2-diol; cyclohexane-1,4-diol; 1,4-bis(hydroxymethyl)cyclohexane and mixtures thereof.

Preferably, the hydroxyl-equivalent ratio of the at least one chain extender to the at least one polyether polyol in the inventive composition is in the rage of 2 to 11, preferably 3 to 9.

In an especially preferred embodiment, the inventive composition comprises at least 40 wt.-% of at least one polyether polyol having a molecular weight of 1000 to 12000 g/mol and a functionality of 1.5 to 2.5; and 4 to 15 wt.-% of at least one chain extender having a molecular weight of 60 to 600 g/mol and a functionality of 1.5 to 2.5, based on the total weight of component A, respectively. It was surprisingly found that the adhesive composition showed especially favorable results with respect to strength and elongation when the amounts where within the claimed ranges.

The inventive composition is characterized by the presence of the latent catalyst mixture. It was surprisingly found that the claimed catalyst mixture allows for an adhesive composition having a long open time with cure time suitable for fast cycle times while at the same time having the mechanical properties required for producing lightweight composite materials. In a preferred embodiment, the metal chelate complex c-1 is a Ti(IV) metal-organic complex and/or a Zr(IV) metal-organic complex. It was surprisingly found that the employment of those kinds of metal-organic complexes resulted in a favorable combination of open time and cure time of the inventive adhesive composition.

In a further preferred embodiment, the metal chelate complex c-1 is selected from the group consisting of iron(III) tris(acetylacetonate), iron(III) tris(1,3-diphenylpropane-1,3-dionate), iron(III) tris(ethylacetoacetate), iron(III) tris(tert-butylacetoacetate), iron(III) tris(ethyl-3-oxo-valerate), iron(III) tris(ethyl-3-oxo-hexanoate), iron(III) tris(N,N-diethyl-3-oxobutane amidate), iron(III) tris(N,N-dibutyl-3-oxobutane amidate), iron(III) tris(N,N-bis(2-ethylhexyl)-3-oxobutane amidate), iron(III) tris(N,N-bis(2-methoxyethyl)-3-oxobutane amidate), iron(III) tris(N,N-bis(2-dibutyl)-3-oxoheptane amidate), iron(III) tris(N,N-bis(2-methoxyethyl)-3-oxoheptane amidate), iron(III) tris(N,N-bis(2-ethylhexyl)-2-oxo-cyclopentane carboxamidate) and iron(III) tris(N,N-dibutyl-3-oxo-3-phenylpropane amidate); titanium(IV) bis(acetylacetonato)diisopropylate, titanium(IV) bis(acetylacetonato)diisobutylate, titanium(IV) bis(acetylacetonato)-bis(2-ethylhexylate), titanium(IV) bis(1,3-diphenylpropane-1,3-dionato)diisopropylate, titanium(IV) bis(1,3-diphenylpropane-1,3-dionato)-bis(2-ethylhexylate), titanium(IV) bis(ethylacetoacetonato)diisopropylate, titanium(IV) bis(ethylacetoacetonato)-diisobutylate, titanium(IV) bis(ethylacetoacetato)-bis(2-ethylhexylate), titanium(IV)bis (tert-butylacetoacetato)diisopropylate, titanium(IV) bis(tert-butylacetoacetato)-diisobutylate, titanium(IV) bis(tert-butylacetoacetato)-bis(2-ethylhexylate), titanium(IV) bis(ethyl-3-oxo-valerato)diisopropylate, titanium(IV) bis(ethyl-3-oxo-valerato)diisobutylate, titanium(IV) bis(ethyl-3-oxo-valerato)-bis(2-ethylhexylate), titanium(IV) bis(ethyl-3-oxo-hexanoato)diisopropylate, titanium(IV) bis(ethyl-3-oxo-hexanoato)diisobutylate, titanium(IV) bis(ethyl-3-oxo-hexanoato)-bis(2-ethylhexylate), titanium(IV) bis(N,N-diethyl-3-oxobutane amidato)diisoporpylate, titanium(IV) bis(N,N-diethyl-3-oxobutane amidato)diisobutylate, titanium(IV) bis(N,N-diethyl-3-oxobutane amidato)-bis(2-ethylhexylate), titanium(IV) bis(N,N-dibutyl-3-oxobutane amidato)diisoporpylate, titanium(IV) bis(N,N-dibutyl-3-oxobutane amidato)diisobutylate, titanium(IV) bis(N,N-dibutyl-3-oxobutane amidato)-bis(2-ethylhexylate), titanium(IV) bis(N,N-dinutyl-3-oxoheptane amidato)diisopropylate, titanium(IV) bis(N,N-dinutyl-3-oxoheptane amidato)diisobutylate, titanium(IV) bis(N,N-dinutyl-3-oxoheptane amidato)-bis(2-ethylhexylate), titanium(IV) bis(N,N-bis-(2-ethylhexyl)-3-oxobutane amidato)diisopropylate, titanium(IV) bis(N,N-bis-(2-ethylhexyl)-3-oxobutane amidato)diisobutylate, titanium(IV) bis(N,N-bis-(2-ethylhexyl)-3-oxobutane amidato)-bis(2-ethylhexylate), titanium(IV) bis(N,N-bis(2-ethylhexyl)-2-oxo-cyclopentane caboxamidato)diisopropylate, titanium(IV) bis(N,N-bis(2-ethylhexyl)-2-oxo-cyclopentane caboxamidato)diisobutylate, titanium(IV) bis(N,N-bis(2-ethylhexyl)-2-oxo-cyclopentane caboxamidato)-bis(2-ethylhexylate), titanium(IV) bis(N,N-dibutyl-3-oxo-3-phenylpropanamidato)diisopropylate, titanium(IV) bis(N,N-dibutyl-3-oxo-3-phenylpropanamidato)diisobutylate, titanium(IV) bis(N,N-dibutyl-3-oxo-3-phenylpropanamidato)-bis(2-ethylhexylate); zirconium(IV) tetrakis(acetylacetonate), zirconium(IV) tetrakis(1,3-diphenylpropane-1,3-dionate), zirconium(IV) tetrakis(1-phenylbutane-1,3-dionate), zirconium(IV) tetrakis(ethylacetoacetate), zirconium(IV) tetrakis(tert-butylacetoacetate), zirconium(IV) tetrakis(ethyl-3-oxo-valerate), zirconium(IV) tetrakis(ethyl-3-oxo-hexanoate), zirconium(IV) tetrakis(N,N-diethyl-3-oxobutane amidate), zirconium(IV) tetrakis(N,N-dibutyl-3-oxobutane amidate), zirconium(IV) tetrakis(N,N-dibutyl-3-oxobutane amidate), zirconium(IV) tetrakis-(N,N-dibutyl-3-oxoheptane amidate), zirconium(IV) tetrakis(N,N-bis(2-ethylhexyl)-3-oxobutane amidate), zirconium(IV) tetrakis(N,N-bis(2-ethylhexyl)-2-oxo-cyclopentane carboxamidate) and zirconium(IV) tetrakis-(N,N-dibutyl-3-oxo-3-phenylpropanamidate) as well as mixture thereof.

In a preferred embodiment, the metal chelate complex comprises a multidentate ligand comprising N,N,N',N'-tetrakis(2-hydroxyalkyl)ethylenediamine which forms a hydrolytically stable metal chelate with titanium and zirconium. Additional ligands may also be present, including an alkoxide, an aryloxide, a deprotonated acid anion, a betadiketonate anion, a betaketoester such as an alkylacetoacetonate anion or an N,N-dialkylacetoacetamide anion as mentioned above.

In an especially preferred embodiment, the metal chelate complex c-1 is selected from the group consisting of Titanium(IV) (N,N,N',N'-tetrakis(2-oxyethyl)ethylendiamine), Titanium(IV) (N,N,N',N'-tetrakis(2-oxypropyl)ethylendiamine), Titanium(IV) (N,N,N',N'-(2-oxyethyl)₃(2-hydroxyethyl)ethylendiamine)(pentandionato), Titanium(IV) (N,N,N',N'-(2-oxypropyl)₃(2-hydroxypropyl)ethylendiamine)(pentandionato), Titanium(IV) (N,N,N',N'-(2-oxyethyl)₂(2-hydroxyethyl)₂ethylendiamine)-bis(pentandionato), Titanium(IV) (N,N,N',N'-(2-oxypropyl)₂(2-hydroxypropyl)₂ethylendiamine)bis(pentandionato) as well as mixtures thereof.

The latent catalyst mixture according to the invention comprises at least one amidine salt and/or tertiary amine salt (c-2).

Specific examples of suitable amines to be used to produce the at least one amidine salt and/or tertiary amine salt are methylamine, ethylamine, diethylamine, triethylamine, tri-(n-propyl)-amine, di-(n-butyl)-amine, N-methyl-N,N-di-(n-butyl)-amine, piperidine, N-methyl piperidine, morpholine, N-methyl morpholine, permethylated diethylene triamine, diethylene triamine, triethylene diamine, diethanolamine, dipropanolamine, triethanolamine, N,N-dimethyl benzylamine, ethylene diamine, hexamethylene diamine as well as mixtures thereof. In addition to the preferred amines mentioned above by way of example, heterocyclic amines in which the amine nitrogen atom is part of a heteroaromatic ring (such as pyridine and 1-methyl pyridine) or aromatic amines (such as aniline and N,N-dimethyl aniline) may also be used to produce the salts useful in the present invention.

Non-cyclic amidines such as N,N'-dimethyl acetamidine, N,N'-dicyclohexyl-N-methyl acetamidine and monocyclic amidines such as 2,3-dimethyl-3,4,5,6-tetrahydropyrimidine; bicyclic amidines, such as 1,5-diazabicyclo(3,4,0)non-5-ene and 1,8-diazabicyclo(5,4,0)undec-7-ene may also be employed as component (c-2) in the present invention. These and further tertiary amines and/or amidines may be employed. Said components may be reacted with an acid of the structure R-COOH , (where R represents saturated and unsaturated alkyl and cycloalkyl radicals and aryl radicals, the hydrogen atoms of which may be replaced, for example, by halogen atoms and OH groups), for example 2-ethylhexanoic acid, formic acid, acetic acid, methacrylic acid, trifluoroacetic acid, 3-butenoic acid, crotonic acid, isocrotonic acid, isophthalic acid, methacrylic acid, benzoic acid, cyanoacetic acid, 5-hydroxyisophthalic acid, methylsalicylic acid, polymeric acids and mixtures thereof.

In a preferred embodiment, the least one amidine salt and/or tertiary amine salt is an organic acid salt, preferably an organic acid salt of DBU (1,8-diaza-bicyclo(5.4.0)undec-7-ene).

A particularly preferred catalyst component c-2 is the reaction product formed from DBU and an alkenemonocarboxylic acid, for example crotonic acid, isocrotonic acid, 3-butenoic acid, methacrylic acid, or mixtures thereof are particularly preferred.

The latent catalyst mixture comprised in the inventive composition comprises as a third component at least one co-catalyst c-3. These are preferably components known to be capable of trimerization of isocyanates like e.g. carboxylic acid salts. Suitable compounds are for example metal acetates, metal 2-ethylhexanoates, metal octoates, metal neo-decanoates.

The co-catalyst is preferably an aliphatic amine or polyamine. Suitable co-catalysts include amines such as N,N',N"- tris(N,N' (dialkylamino)alkyl)hexahydro-s-triazines, for example 1,3,5-tris(3-(dimethylamino)propyl)-hexahydro-s-triazine; 1,3,5-tris(N,N-dimethyl-2-aminoethyl)-s-hexahydrotriazine, 1,3,5-tris(N,N-dimethyl-2-aminopropyl)-s-hexahydrotriazine, 1,3,5-tris(N,N-diethyl-2-aminoethyl)-s-hexahydrotriazine, 1,3,5-tris(N,N-diethyl-3-aminopropyl)-s-hexahydrotriazine, 1,3,5-tris(N,N-dipropyl-2-aminoethyl)-s-hexahydrotriazine; pentamethyldiethylenetriamine; the proprietary blend of trimerisation amines sold as DABCO TMR-13, N-methyldicydohexylamine, N,N-dimethylethanolamine, N,N-dimethylcyclohexylamine, N,N- dimethylbenzylamine, N,N,N',N'-tetramethyl-1,3-butanediamine, N,N,N',N'-tetramethylpropanediamine, N-methylmorpholine, N-ethylmorpholine, triethylene diamines, mono(dialkylaminoalkyl)phenols, dialkylaminoalkoxyalcohols such as dimethylaminoethoxyethanol, and 2,4,6-tris(alkylaminoalkyl)phenols such as 2,4,6-tris(dimethylaminomethyl)phenol.

The N,N',N"-tris(N,N'-(dialkylamino)alkyl)hexahydro-s-triazines are preferred trimerisation catalysts in the present invention, in particular 1,3,5-tris(N,N-dimethyl-3-aminopropyl)-s-hexahydrotriazine which can also be designated as 1,3,5-tris(3-dimethylaminopropyl)-s-hexahydrotriazine.

In a preferred embodiment of the present invention, the latent catalyst mixture is present in an amount of 0.01 to 5 wt.-%, preferably 0.01 to 2 wt.-%, based on the total weight of component A.

The adhesive composition according to the invention further comprises a component B which comprises at least one NCO-terminated compound. Preferably, the NCO-terminated compound is selected from the group monomeric diisocyanates and triisocyanates, oligomers and polymers of said monomeric diisocyanates and triisocyanates and mixtures thereof.

Suitable monomeric di- or triisocyanates are selected from the group consisting of 2,4- and 2,6-toluylene diisocyanate and any mixtures of these isomers (TDI), 4,4'-, 2,4'- and 2,2'-diphenylmethane diisocyanate and any mixtures of these isomers (MDI), mixtures of MDI and MDI homologs (polymer MDI or PMDI), 1,3- and 1,4-phenylene diisocyanate, 2,3,5,6-tetramethyl-1,4-diisocyanatobenzene, naphthalene-1,5-diisocyanate (NDI), 3,3'-dimethyl-4,4'-diisocyanatodiphenyl (TODI), dianisidine diisocyanate (DADI), 1,3,5-tris-(isocyanatomethyl)benzene, tris-(4-isocyanatophenyl)methane and tris-(4-isocyanatophenyl)thiophosphate, 1,4-tetramethylene diisocyanate, 2-methylpentamethylene-1,5-diisocyanate, 1,6-hexamethylene diisocyanate (HDI), 2,2,4- and 2,4,4-trimethyl-1,6-hexamethylene diisocyanate (TMDI), 1,10-decamethylene diisocyanate, 1,12-dodecamethylene diisocyanate, lysine and lysine ester diisocyanate, cyclohexane-1,3- and -1,4-diisocyanate, 1-methyl-2,4- and -2,6-diisocyanatocyclohexane and any mixtures of these isomers (HTDI or H₆TDI), 1-isocyanato-3,3,5-trimethyl-5-isocyanatomethyl cyclohexane (=isophorone diisocyanate or IPDI), perhydro-2,4'- and -4,4'-diphenylmethane diisocyanate (HMDI or H₁₂MDI), 1,4-diisocyanato-2,2,6-trimethylcyclohexane (TMCDI), 1,3- and 1,4-bis(isocyanatomethyl)cyclohexane, m- and p-xylylene diisocyanate (m- and p-XDI), m- and p-tetramethyl-1,3- and -1,4-xylylene diisocyanate (m- and p-TMXDI), bis(1-isocyanato-1-methylethyl)naphthalene, dimer- and trimer fatty acid isocyanates such as 3,6-bis(9-isocyanatononyl)-4,5-di-(1-heptenyl)cyclohexene (dimeryl diisocyanate) and α,α,α',α',α",α"-hexamethyl-1,3,5-mesitylene triisocyanate as well as mixtures thereof.

Preferably, component B comprises an NCO-terminated prepolymer, either as the only NCO-compound or in combination with other NCO-terminated compounds. Prepolymer as used in the present invention refers to a reaction product of at least one isocyanate-reactive compound and at least one polyisocyante. The isocyanate-reactive compound may, for example be selected from the group consisting of polyether polyols, polyester polyols and polyamines.

In order to adjust the physical and mechanical properties of the inventive adhesive composition, further components may be added. In a preferred embodiment, the inventive adhesive composition therefore comprises further components, in particular components selected from the group consisting of softeners, solvents, organic and inorganic fillers, fibers, pigments, rheology modifiers, drying agents, stabilizers, adhesion promoters, flame retardants, surface active agents, biocides and mixtures thereof.

A further object of the present invention is a method for the production of the inventive two-component adhesive composition. The inventive method of production comprises the steps of
i) providing component A;
ii) providing component B; and
iii) mixing components A and B to obtain the adhesive composition.

Another object of the present invention is a cured adhesive composition obtainable by curing the two-component adhesive composition according to the invention.

In a preferred embodiment, the curing is achieved by exposure to radiation and/or humidity. In preferred embodiment curing of component A and component B is carried out under elevated temperatures, preferably 40-120°C. In an alternatively preferred embodiment, curing is carried out at room temperature (20 to 25°C).

It was surprisingly found that the inventive cured composition shows excellent mechanical properties. In a preferred embodiment, the cured composition has a tensile shear strength of more than 3 MPa, preferably more than 3.5 MPa, determined according to DIN EN 1465.

In an alternatively preferred embodiment, the cured composition according to the invention has a tensile elongation of more than 15%, preferably 50 to 400%, determined according to DIN EN ISO 527.

Further preferred is an embodiment wherein the cured composition according to the invention has a tensile strength of more than 5 MPa, preferably 5 to 15 MPa, determined according to DIN EN ISO 527.

In a still further preferred embodiment, the inventive composition, when cured, has a tensile modulus of no more than 800 MPa, preferably no more than 500 MPa, especially 10 to 100 MPa, determined at 23°C according to DIN EN ISO 6721.

The present invention refers to a two-component adhesive composition. A further object of the present is therefore a method for bonding a first substrate to a second substrate, the method comprising the steps of
i) mixing the two components A and B of a two-component adhesive composition according to the invention;
ii) applying the mixed adhesive composition to at least one of the substrate surfaces to be bonded;
iii) joining the substrates to be bonded within the open time in a way that the mixed composition is between the substrates; and
iv) curing the adhesive composition.

In preferred embodiment the adhesive composition is applied onto the surface of the first substrate at a temperature of 20 to 100°C, preferably 23 to 40°C.

The mixed adhesive composition may be applied to the surface of the substrate in any manner known to the person skilled in the art, for example by spraying, laminating, 2K dosing equipment for bead application or casting.

In a preferred embodiment, contacting of the first substrate to be bonded with the second substrate to be bonded is carried out by applying pressure.

A further object of the present invention is an article obtained by the inventive method of bonding a first substrate to a second substrate.

In a preferred embodiment, the article may comprise further components such as metal, plastic, foam, fiber composite, a fiber-containing shaped body comprising glass fibers, carbon fibers, natural fibers or synthetic fibers embedded in a plastic matrix or mixtures thereof.

A further object of the present invention is an article comprising the two-component adhesive composition according to the invention.

Either article can be produced for a wide variety of technical fields, for example automotive industry, trains, planes or wind energy converters.

The invention will be further explained in more detail by the following examples, which are not to be understood as limiting the present invention.

### Examples:

The following compounds were used as catalysts:
(c-1) Chelate metal complex: Ti(IV) chelate
(c-2) Amidine salt and/or tertiary amine salt:
   c-2-1: mixture of DBU and butenoic acid in 50 weight % diethylene glycol
   c-2-2: carboxylic acid salt of 1,8-Diazabicyclo[5.4.0]undec-7-en
   c-2-3: 2-ethylhexanoic acid salt of 1,8-Diazabicyclo[5.4.0]undec-7-en
(c-3) Co-catalyst: N,N,N',N',N",N"-hexamethyl-1,3,5-triazine-1,3,5(2H,4H,6H)-tripropanamine
   DABCO: 33% 1,4-diazabicyclo[2.2.2]octane in dipropylene glycol
   DBTDL: dibutyltin dilaurate

The content of the individual components is given in weight-%.

**Table 1:**

| Component A | Ex 1 | Ex 2 | Ex 3 |
|---|---|---|---|
| Polyether diol (Mₙ 4000 g/mol) | 74 | 74 | 74 |
| butanediol | 6 | 6 | 6 |
| Fumed silica | 3.5 | 3.5 | 3.5 |
| Carbon black | 10 | 10 | 10 |
| zeolite | 5.4 | 5.4 | 5.4 |
| c-1/c-3 in reactive diluent | 1 | 1 | 1 |
| c-2-1 | 0.13 | | |
| c-2-2 | | 0.15 | |
| c-2-3 | | | 0.12 |
| Total | 100 | 100 | 100 |

As component B an MDI-based diisocyanate component was used. Each of the Examples had an NCO index of 1.05.

As comparative examples, the following compositions were prepared, with the contents given in weight-%.

**Table 2:**

| Component A | Ex 4 | Ex 5 | Ex 6 | Ex 7 | Ex 8 | Ex 9 |
|---|---|---|---|---|---|---|
| Polyether diol | 74 | 74 | 74 | 74 | 74 | 74 |
| (Mₙ 4000 g/mol) | | | | | | |
| Chain extender | 6 | 6 | 6 | 6 | 6 | 6 |
| Fumed silica | 3.5 | 3.5 | 3.5 | 3.5 | 3.5 | 3.5 |
| Carbon black | 10 | 10 | 10 | 10 | 10 | 10 |
| zeolite | 5.4 | 5.4 | 5.4 | 5.4 | 5.4 | 5.4 |
| c-1/c-3 in reactive diluent | | | 1 | 1.4 | | |
| c-2-1 | | | | | 0.13 | 0.48 |
| DABCO | 0.1 | | | | | |
| DBTDL | | 0.02 | | | | |
| Total | 100 | 100 | 100 | 100 | 100 | 100 |

As component B an MDI-based diisocyanate component was used. Each of the Examples had an NCO index of 1.05.

The following test were conducted:
A) Lap shear strength was determined after 24 h (A-1) and 7 days (A-2) after curing by room temperature, 1.5 mm gap, Wevo e-coated steel (45mm x 100mm x 2.5mm)
B) Heat activation 180 s 120°C IR radiation cure, 1.5 mm gap, PU CFRP (LOCTITE MAX 3 resin) (45mm x 100mm x 2.5mm)
C) Open time limit, 10x10 mm adhesive bead squeezability test, manual mixing of 20g for 30s at room temperature, point in time of solidification is given
D-1) Tensile test I: 7 d, 23°C/50%rh cure, 4mm 1BA; 10mm/min; E-modulus determination with 10 mm/min and regression line
D-2) Tensile test II: 3 d, 80°C cure, 4mm 1BA; 10mm/min; E-modulus determination with 10 mm/min and regression line

The results are summarized in Table 3:

| Test | Ex 1 | Ex 2 | Ex 3 | Ex 4* | Ex 5* | Ex 6* | Ex 7* | Ex 8* | Ex 9* |
|---|---|---|---|---|---|---|---|---|---|
| A-1 [MPa] | 3.6 | 3.2 | 3.8 | 3.2 | 1.2 | 3.6 | 5.6 | 0.4 | 1.6 |
| A-2 [MPa] | 7.9 | 10.4 | 9.8 | 6.4 | 2.7 | 8.9 | 11.4 | 1.4 | 2.3 |
| B [MPa] | 1.58 | 2.2 | 2.1 | 0.03 | fail | 0.15 | 0.44 | 1.26 | 1.41 |
| C [min] | 5 | 5 | 5 | 4 | 5 | 7.5 | 5 | >90 | 7 |

| D-1 | | | | | | | | | |
|---|---|---|---|---|---|---|---|---|---|
| Eₜ [MPa] | 33.5 | 25.5 | 31.9 | 19.2 | 16.7 | 25.3 | 24.6 | 16.9 | 28.7 |
| σₘ [MPa] | 7.9 | 8.9 | 9.7 | 3.6 | 3.4 | 9.5 | 8.8 | 2.1 | 5.8 |
| εₘ [%] | 160 | 250 | 260 | 80 | 100 | 240 | 170 | 29 | 140 |
| ε_{b} [%] | 170 | 290 | 240 | 80 | 110 | 210 | 170 | - | 150 |

| D-2 | | | | | | | | | |
|---|---|---|---|---|---|---|---|---|---|
| Eₜ [MPa] | 15 | | | | 17.1 | 15.6 | 18.4 | 11.7 | 17.9 |
| σₘ [MPa] | 6.8 | | | | 10 | 10.5 | 10.4 | 10.1 | 5.3 |
| εₘ [%] | 270 | | | | 260 | 280 | 240 | 250 | 160 |
| ε_{b} [%] | 260 | | | | 250 | 290 | 230 | 250 | 180 |

| | | | | | | | | | |
|---|---|---|---|---|---|---|---|---|---|
| * not according to the invention | | | | | | | | | |

The examples according to the invention show excellent mechanical properties as well as excellent heat activation and fast cure at low temperature (23°C) while maintaining a good workability (open time).

As can be seen from the data presented above, the compositions according to invention show excellent performance in all respective fields. In contrast thereto, the comparative composition lacking the inventive catalyst system, failed in at least one aspect of performance. In particular, the inventive composition showed an excellent heat activation behavior, resulting in a high bonding strength even after a short activation time, which could not be matched by the comparative compositions.

## Claims

1. Two-component adhesive composition comprising a first component A and a second component B, wherein
Component A comprises:
a) at least one polyether polyol having a molecular weight of 1000 to 12000 g/mol and a functionality of 1.5 to 2.5;
b) at least one chain extender having a molecular weight of 60 to 600 g/mol and a functionality of 1.5 to 2.5;
c) a latent catalyst mixture, the mixture comprising:
c-1) a metal chelate complex, the metal being selected from the group consisting of Ti, Zr, Fe, Zn, Al and Bi;
c-2) at least one amidine salt and/or tertiary amine salt; and
c-3) at least one co-catalyst capable of accelerating the trimerization of isocyanates;
and wherein
Component B comprises at least one NCO-terminated compound.

2. Two-component adhesive composition according to claim 1, wherein the mixing ratio by volume of component A and component B is 10:1 to 1:2, preferably 5:1 to 1:1.1.

3. Two-component adhesive composition according to any of the forgoing claims, wherein the at least one polyether polyol is present in an amount of at least 40 wt.-%, preferably 60 to 80 wt.-%, based on the total weight of component A.

4. Two-component adhesive composition according to any of the forgoing claims, wherein the at least one chain extender is present in an amount of 4 to 15 wt.-%, preferably 5 to 12 wt.-%, based on the total weight of component A.

5. Two-component adhesive composition according to any of the forgoing claims, wherein the hydroxyl-equivalent ratio of the at least one chain extender and the least one polyether polyol is in the rage of 2 to 11, preferably 3 to 9.

6. Two-component adhesive composition according to any of the forgoing claims, wherein the metal chelate complex is a Ti(IV) metal-organic compound and/or a Zr(IV) metal-organic compound.

7. Two-component adhesive composition according to any of the forgoing claims, wherein the amidine salt and/or tertiary amine salt is an organic acid salt, preferably an organic acid salt of DBU.

8. Two-component adhesive composition according to any of the forgoing claims, wherein the co-catalyst is an aliphatic amine or polyamine.

9. Two-component adhesive composition according to any of the forgoing claims, wherein the latent catalyst mixture is present in an amount of 0.01 to 5 wt.-%, preferably 0.01 to 2 wt.-%, based on the total weight of component A.

10. Method for the production of a two-component adhesive composition according to any of claims 1 to 9 comprising the steps of:
i) providing component A;
ii) providing component B; and
iii) mixing components A and B to obtain the adhesive composition.

11. Cured adhesive composition obtainable by curing a two-component adhesive composition according to any of claims 1 to 9.

12. Method for bonding a first substrate to a second substrate, the method comprising the steps of
i) mixing the two components of a two-component composition according to any of claims 1 to 9;
ii) applying the mixed adhesive composition to at least one of the substrate surfaces to be bonded;
iii) joining the substrates to be bonded in a way that the adhesive composition is between the substrates; and
iv) curing the adhesive composition.

13. Article obtained by a method for bonding according to claim 12.

14. Article comprising the two-component adhesive composition according to any of claims 1 to 9.

15. Article comprising the cured adhesive composition according claim 11.
